# EUROPÄISCHE PATENTSCHRIFT

(11) **EP 3 266 053 B1**
(45) Veröffentlichungstag und Bekanntmachung des Hinweises auf die Patenterteilung: **28.11.2018**
(21) Anmeldenummer: 16707468.1
(22) Anmeldetag: 03.03.2016
(51) Int. Cl.: H01M 2/10, H01M 10/48, H01M 10/42

(54) **AKKUPACK FÜR EINE HANDWERKZEUGMASCHINE**
BATTERY PACK FOR A POWER TOOL
BLOC-BATTERIE POUR OUTIL ÉLECTRIQUE

(30) Priorität: 06.03.2015 DE 102015204053; 02.03.2016 DE 102016203422
(43) Veröffentlichungstag der Anmeldung: 10.01.2018
(73) Patentinhaber: Robert Bosch GmbH, 70442 Stuttgart (DE)
(72) Erfinder: REJMAN, Marcin, 71334 Waiblingen (DE); SEIDEL, Thorsten, 71686 Remseck (DE); SEGRET, Mickael, 70569Stuttgart (DE); KLEE, Christoph, 70599 Stuttgart (DE)
(86) Internationale Anmeldenummer: PCT/EP2016/054504
(87) Internationale Veröffentlichungsnummer: WO 2016/142254

(56) Entgegenhaltungen:
- EP-A2- 2 128 912
- JP-A-200020 811 8AJ
- US-A1- 2006 164 032

## Beschreibung

Die vorliegende Erfindung betrifft einen Akkupack für eine Handwerkzeugmaschine nach Anspruch 1.

Da Akkugeräte eine hohe Flexibilität beim Arbeiten ermöglichen, insbesondere unabhängig von Netzstrom sind und somit auch Außenarbeiten bequem durchgeführt werden können, ist bei einem Betrieb einer Handwerkzeugmaschine vielfach vorgesehen, Akkupacks einzusetzen.

Derartige Akkupacks sind grundsätzlich bekannt und weisen wiederaufladbare Akkumulatoren, in der Regel eine Mehrzahl von in Parallel- und/oder Reihenschaltung verbundener Akkuzellen auf. Im Zuge dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann und für den Betrieb der Handwerkzeugmaschine die Energie liefert und austauschbar in einer Kammer, einer Schnittstelle oder dergleichen der Handwerkzeugmaschine aufgenommen ist. Das Zuordnen des Akkupacks zur Handwerkzeugmaschine erfolgt durch Einstecken beziehungsweise Einschieben des Akkupacks in eine komplementäre Einsteckbuchse des Gerätegehäuses, wobei der Akkupack mit dem Gerätegehäuse der Handwerkzeugmaschine derart koppelbar ist, dass beim Koppeln der beiden Gehäuse das Elektrowerkzeug elektrisch an den Akkupack angekoppelt und mechanisch verriegelt wird. Die elektrische Kontaktierung erfolgt zumeist im Bereich der Verriegelungsvorrichtung.

Die Akkuzelle ist mit der Akkupackelektronik verbunden, und bei mehreren Akkuzellen sind diese zum einen untereinander und zum anderen mit der Akkupackelektronik verbunden. Dabei werden für die Reihenschaltung zum Teil sogenannte Leiterbleche und/oder Kabel verwendet, die an die jeweiligen komplementären Pole einer Akkuzelle angelötet werden und diese miteinander verbinden. Nachteilig am genannten Stand der Technik ist, dass der Montageprozess aufwendig, kostenintensiv und fehleranfällig ist.

In EP 2 128 912 A2 ist ein Akkupack für eine Handwerkzeugmaschine beschrieben.

### Offenbarung der Erfindung

Aufgabe der Erfindung ist es, die oben genannten Nachteile zu umgehen und einen Akkupack für eine Handwerkzeugmaschine bereitzustellen, bei dem die Reihen- oder Serienschaltung der Akkuzellen untereinander sowie der Zusammenbau des Akkupacks vereinfacht ist. Ferner soll der Akkupack eine gute Ergonomie und Montierbarkeit aufweisen, und dabei möglichst flexibel einsetzbar, kostengünstig und einfach aufgebaut sein.

Diese Aufgabe wird durch einen Akkupack gemäß Anspruch 1 gelöst. Vorteilhafte Ausgestaltungen, Varianten und Weiterbildungen der Erfindung sind den Unteransprüchen zu entnehmen.

Es ist vorgesehen, dass ein Akkupack für eine Handwerkzeugmaschine einen Zellenhalter, der mindestens eine Akkuzelle aufnimmt, aufweist, wobei die Akkuzelle eine zu einer Längsachse parallel verlaufende Mantelfläche aufweist, wobei die Mantelfläche von zwei im Wesentlichen senkrecht zu der Längsachse stehenden Stirnflächen begrenzt wird, und wobei die Mantelfläche und die Stirnflächen eine Außenhülle der Akkuzelle bilden. An den Stirnflächen sind insbesondere die elektrischen Pole, der positive Pol und der negative Pol, der Akkuzelle angeordnet. Ferner umfasst der Akkupack eine Akkupackelektronik, wobei die Akkupackelektronik zumindest eine Leiterplatte mit Kontaktelementen zur Herstellung einer elektrischen Verbindung zwischen dem Akkupack und der Handwerkzeugmaschine umfasst. Erfindungsgemäß ist vorgesehen, dass des Weiteren wenigstens ein mit der Akkuzelle korrespondierendes Kontaktmittel angeordnet ist, wobei das Kontaktmittel die korrespondierende Akkuzelle an der Mantelfläche elektrisch kontaktiert. Auf diese Weise kann auf eine zusätzliche Kontaktierung der einzelnen Akkuzellen mit der Akkupackelektronik über einen Stromleiter verzichtet werden. Zudem sieht die Erfindung vor, dass die Akkupackelektronik einen Microcontroller umfasst, wobei der Mikrocontroller elektrisch mit dem Kontaktmittel verbunden ist und dazu konfiguriert ist, wenigstens einen Betriebsparameter der einzelnen Akkuzelle über das wenigstens eine Kontaktmittel zu erfassen. Mittels des Microcontrollers der Akkupackelektronik kann u. a. der Ladezustand über die Spannung der einzelnen Akkuzellen überwacht und mittels einer entsprechenden Regelung gesteuert werden. Entsprechend kann eine Einzelzellenüberwachung erfolgen, wobei einzelne Akkuzellen mittels der Kontaktmittel direkt mit der Leiterplatte der Akkupackelektronik verbunden sind. Eine derartige Verbindung kann beispielsweise durch eine Lötverbindung erfolgen, wobei die Akkupackelektronik vorteilhafterweise entsprechende Anlötpads aufweisen kann. Somit kann aufgrund der Verbindung zwischen den Akkuzellen und der Leiterplatte festgestellt werden, ob alle Akkuzellen vorschriftsmäßig geladen werden bzw. ob gegebenenfalls ein Ladestrom erreicht wird, den die Akkuzellen nicht zu verkraften vermögen. Darüber hinaus kann eine Regelung vorgesehen sein, mittels derer der Ladestrom so geregelt wird, dass einerseits eine Überlastung einzelner Akkuzellen verhindert wird, und auf der anderen Seite sämtliche Akkuzellen vollständig aufgeladen werden können. Auf diese Weise wird über lange Zeit eine gute Gebrauchsfähigkeit des entsprechenden Akkupacks erreicht. Weiterhin ist es besonders vorteilhaft, wenn die Kontaktmittel über eine Schweiß- oder eine Lötverbindung mit der Akkupackelektronik verbunden sind. Hierdurch wird eine besonders einfache mechanische und auch elektrische Kontaktierung erreicht, zum anderen stellen derartige Verbindungen auch besonders sichere Verbindungen dar. Ferner kann durch eine entsprechend ausgeführte Schweißverbindung auch ein Toleranzausgleich sowie ein Wärmedehnungsausgleich erzielt werden.

In einer besonders bevorzugten Ausführungsform umfasst die Akkupackelektronik des Weiteren zumindest eine zweite, insbesondere flexible Leiterplatte. Bevorzugterweise weist die insbesondere flexible Leiterplatte eine Biegesteifigkeit auf, die zumindest bereichsweise derart ausgestaltet ist, dass zumindest bereichsweise eine Biegeverformung der flexiblen Leiterplatte im montierten Zustand möglich ist. Dabei ist es von Vorteil, wenn die Biegeverformung der flexiblen Leiterplatte derart stattfinden kann, dass eine Mittelebene der Leiterplatte im Bereich der Biegeumformung um einen Winkel ϕ gegenüber einer ursprünglichen Lage verformt werden kann. Auf diese Weise kann gewährlistet werden, dass die flexible Leiterplatte an die geometrische Form des Akkupackgehäuses bzw. des Zellenhalters variabel angepasst werden kann. Ferner können mehrere verschiedene elektrische Bauteile auf der flexiblen Leiterplatte positioniert werden, die normalerweise örtlich voneinander getrennt angeordnet sind, wie beispielsweise verschiedene Betätigungselemente,

Leuchtanzeigen, Spannungsabgriffe, Temperatursensoren, diverse Funktionsgruppen der Akkupackelektronik, Antennen für ein Funkmodul, Anschlüsse für ein Wireless-Lademodul und/oder Anschlüsse zu einer Ladespule. Auf diese Weise kann die Komplexität der Verkabelung und/oder die Anzahl von Lötverbindungen innerhalb des Akkupackgehäuses reduziert werden, wodurch der Montageaufwand und damit die Kosten verringert und das Akkupack robuster und langlebiger werden.

Je nach Ausführungsform der Akkuzelle ist es besonders vorteilhaft, wenn das wenigstens eine mit der Akkuzelle korrespondierende Kontaktmittel auf der Leiterplatte oder auf der zweiten, insbesondere flexiblen Leiterplatte angeordnet ist, wodurch eine räumliche Trennung verschiedener Kontaktmittel ermöglicht wird. So können beispielsweise die Kontaktelemente zur Herstellung einer elektrischen Verbindung zwischen dem Akkupack und der Handwerkzeugmaschine auf der ersten Leiterplatte angeordnet sein, während das wenigstens eine Kontaktmittel, welches eine korrespondierende Akkuzelle elektrisch kontaktiert, auf der zweiten flexiblen Leiterplatte angeordnet ist. Auf diese Weise kann auf die Kontaktierung der einzelnen Akkuzellen mit der Akkupackelektronik über einen zusätzlichen Stromleiter verzichtet werden kann. Um eine derartige Kontaktierung zu erreichen, können die auf der flexiblen Leiterplatte angeordneten Kontaktmittel um den Winkel ϕ gegenüber der ursprünglichen Lage verformt werden.

In einer besonders bevorzugten Ausgestaltung weist die wenigstens eine Akkuzelle im Wesentlichen keine Isolierummantelung auf. In einer alternativen Ausführungsform weist die wenigstens eine Akkuzelle bereichsweise eine Isolierummantelung auf, wobei die Isolierungsummantelung vorzugsweise an die Stirnflächen und/oder die Bereiche der Mantelflächen angrenzt. In einer anderen alternativen Ausführungsform weist die Akkuzelle eine Isolierummantelung auf, wobei die Isolierummantelung zumindest in dem Bereich, in dem das Kontaktmittel die Akkuzelle kontaktiert, wenigstens eine Aussparung aufweist. Die von der Mantelfläche und den Stirnflächen gebildete Außenhülle der Akkuzelle ist, wie aus dem

Stand der Technik bekannt, aus einem elektrisch leitfähigen Material, insbesondere einem Metall, vorzugsweise Aluminium. Zur Isolierung und Vermeidung von Kurzschlüssen ist, wie ebenfalls aus dem Stand der Technik bekannt, die Außenhülle der Akkuzelle mit einer Isolierummantelung versehen. Die Isolierummantelung umgibt zumindest die Mantelfläche der Akkuzelle im Wesentlichen vollständig. Die Stirnflächen, insbesondere die Pole an den Stirnflächen, liegen frei, um die elektrische Kontaktierung der Akkuzelle zu ermöglichen. Die Stirnflächen, insbesondere die Pole an den Stirnflächen, weisen im Wesentlichen keine Isolierummantelung auf. Als Isolierummantelung eignen sich elektrisch nicht leitfähige Materialien, z.B. Papier, Pappe, Kunststoff. Die Isolierummantelung bildet insbesondere eine dünne, eng an die Mantelfläche anliegende Hülse aus z.B. Papier, Pappe oder aus Kunststoff, z.B. in Form eines Schrumpfschlauches.

Je nach Ausführungsform der Akkuzelle ist es besonders vorteilhaft, wenn das Kontaktmittel in Form einer Kontaktfeder und/oder einer Kontaktklinge, insbesondere als Schneidklemmkontakt ausgebildet ist. Generell besitzt eine Ausführung der Kontaktmittel als Kontaktfeder und deren mechanische wie auch elektrische Kopplung mit einer Akkuzelle den Vorteil, dass die Kontaktmittel gegenüber den Akkuzellen elastisch nachgiebig gelagert sind. Auf diese Weise kann eine zusätzliche Vibrationsfestigkeit erreicht werden, da insbesondere Vibrationen, wie sie bei Elektrohandwerkzeugen, insbesondere bei Schlagbohreinrichtungen oder Bohrhämmern im Betrieb entstehen, ausgeglichen werden können.

In einer besonders vorteilhaften Ausführungsform weist der Zellenhalter mit der Akkuzelle korrespondierende hülsenartige Isolierwandungen auf, wobei die Isolierwandungen zumindest in den Bereichen, in dem die Kontaktmittel die Akkuzelle kontaktieren, wenigstens eine Aussparung aufweisen. Dabei kann der Zellenhalter insbesondere aus einem Spritzgussteil bestehen, das entsprechende Aufnahmen für die Akkuzellen aufweist. Vorzugsweise sind die Isolierwandungen derart ausgeführt, dass eine elektrische Kontaktierung zwischen mehreren Akkuzellen verhindert wird. Auf diese Weise werden Kurzschlüsse verhindert, die über die Berührung der einzelnen Akkuzellen untereinander entstehen. Es ist vorgesehen, dass die Isolierwandungen die jeweilige Akkuzelle im Wesentlichen vollständig umgeben können, wobei sich die Isolierwandungen insbesondere in den Bereichen zwischen den Mantelflächen erstrecken. Ferner ist vorgesehen, dass der Zellenhalter zumindest teilweise aus einem Material besteht, das wärmeleitend und elektrisch isolierend ist, damit entstehende Wärme der Akkuzellen besser abgeführt werden kann.

Vorteilhafterweise ist die Akkuzelle in dem Bereich, in dem das Kontaktmittel die Akkuzelle kontaktiert, zur Reduzierung eines Übergangwiderstandes zwischen dem Kontaktmittel und der Akkuzelle mit einer leitfähigen und passivierenden Paste versehen.

In einer besonders bevorzugten Ausgestaltung der vorliegenden Erfindung weist die Akkuzelle in dem Bereich der Aussparung des Zellenhalters eine Isolierummantelung auf, wobei das Kontaktmittel in Form einer Kontaktklinge ausgebildet ist, wobei die Kontaktierung der Akkuzelle durch das Kontaktmittel durch Einschieben der Akkuzelle in den Zellenhalter erfolgt, wobei das Kontaktmittel die Akkuzelle während des Einschiebens zur Herstellung eines elektrischen Kontaktes anritzt.

Vorteilhafterweise ist der Microcontroller dazu konfiguriert, eine Einzelspannungsüberwachung der einzelnen Akkuzellen über die Kontaktmittel durchzuführen. Die Akkupackelektronik kann darüber hinaus noch eine Reihe weiterer Elektronikelemente zur Steuerung, Regelung oder auch zur Erkennung des Akkupacks umfassen. Ferner können weitere Bauteile, wie insbesondere Schalter, aber auch Ladezustandsanzeigen, mit der Leiterplatte der Akkupackelektronik verbunden sein. So weist in einer besonders vorteilhaften Ausgestaltung der Zellenträger wenigstens einen mit einer Akkuzelle verbindbaren Temperaturfühler, vorzugsweise für jede Akkuzelle jeweils einen Temperaturfühler auf. Dabei kann vorgesehen sein, dass wenigstens ein Temperaturfühler an dem Zellenhalter befestigt, insbesondere direkt in den Zellenhalter integriert und mit der Akkupackelektronik verbunden ist. Des Weiteren kann in einer weiteren Ausgestaltung der Erfindung eine Temperatursicherung vorgesehen sein, die mit wenigstens einem Temperaturfühler verbunden ist und beispielsweise über die Akkupackelektronik gesteuert werden kann, und mittels derer eine Überhitzung einzelner Akkuzellen verhindert wird. Ferner kann der Zellenträger eine zusätzliche Stromsicherung aufweisen, welche mit dem Microcontroller der Akkupackelektronik verbunden ist und mittels derer eine Überlastung einzelner Akkuzellen oder aller Akkuzellen verhindert wird.

Mit Hilfe der beschriebenen optimierten Ausgestaltung des erfindungsgemäßen Akkupacks werden viele Funktionen innerhalb des Akkupacks verbessert. Des Weiteren können in einem Akkupack verschiedene Ausführungsformen eines Zellenhalters verwendet werden, so dass Akkuzellen mit verschiedenen Durchmessern und Längen aufgenommen werden können und eine Anwendung des Zellenhalters in unterschiedlichen Akkupacks gewährleistet werden kann.

Die Verwendung eines erfindungsgemäßen Akkupacks ist platzsparend, so dass die Baulänge und die Baubreite der Handwerkzeugmaschine in geringerem Ausmaß als bisher von den Abmessungen des Akkupacks bestimmt wird.

Ferner können als Akkuzellen insbesondere Lithiumionenzellen verwendet werden, da es insbesondere bei Lithiumionenzellen möglich ist, mehrere Akkuzellen zu Akkuzellenblöcken zusammenzufassen, in denen mehrere Akkuzellen in einer Parallelschaltung verbunden sind. Dabei ist es besonders vorteilhaft, dass der Zellenhalter Akkuzellen mit verschiedenen Durchmessern und Längen aufnehmen kann, wodurch die Anwendung des Zellenhalter bzw. des Zellenträger in unterschiedlichen Akkupacks gewährleistet werden kann.

Der erfindungsgemäße Akkupack kann mit einer Handwerkzeugmaschine lösbar verbunden sein. Dementsprechend bildet eine Handwerkzeugmaschine, sofern sie mit einem erfindungsgemäßen Akkupack verbunden ist, einen weiteren Gegenstand der Erfindung. Der in der Handwerkzeugmaschine eingesetzte Akkupack dient dabei dem Antrieb der Handwerkzeugmaschine.

Generell werden unter einer Handwerkzeugmaschine im Rahmen der Anmeldung sämtliche Handwerkzeugmaschinen mit einem in Rotation oder Translation versetzbaren Werkzeugträger, der direkt, über ein Getriebe oder über ein Planetengetriebe von einem Antriebsmotor antreibbar ist, wie beispielsweise Stabschrauber, Akku-Bohrer, Schlagbohrmaschinen, Multifunktionswerkzeuge, Sägen, Scheren, Schleifer und/ oder Bohrschrauber verstanden. Als Übertragung elektrischer Energie soll in diesem Zusammenhang insbesondere verstanden werden, dass die Handwerkzeugmaschine über den Akkupack mit Energie versorgt wird.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert, wobei für gleiche Merkmale gleiche Bezugszeichen verwendet werden. Die Zeichnungen sind schematisch und zeigen:
- Fig. 1: beispielhaft eine Ansicht einer Handwerkzeugmaschine mit einem erfindungsgemäßen Akkupack;
- Fig. 2: eine perspektivische Darstellung eines erfindungsgemäßen Akkupacks;
- Fig. 3: eine Draufsicht auf den Akkupack aus Figur 2;
- Fig. 4: eine perspektivische Explosionsdarstellung einer ersten Ausführungsform eines erfindungsgemäßen Akkupacks;
- Fig. 5: eine Seitenansicht des Akkupacks aus Figur 4; und
- Fig. 6: eine perspektivische Ansicht zweier Akkuzellen.
- Fig. 7: eine perspektivische Darstellung einer Ausführungsform einer flexiblen Leiterplatte;
- Fig. 8: eine perspektivische Darstellung eines Zellenhalters mit der eingebauten flexiblen Leiterplatte aus Figur 7;

- Fig. 9: eine perspektivische Explosionsdarstellung einer zweiten Ausführungsform eines erfindungsgemäßen Akkupacks; und
- Fig. 10: eine Seitenansicht der zweiten Ausführungsform aus Figur 9.

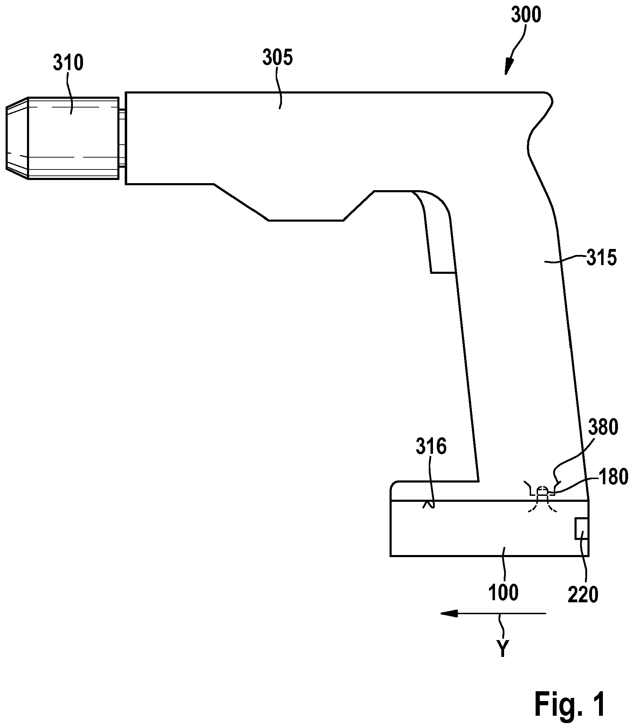

Die Figur 1 zeigt ein als Handwerkzeugmaschine 300 ausgebildetes Elektrogerät. Gemäß der dargestellten Ausführungsform ist die Handwerkzeugmaschine 300 zur netzunabhängigen Stromversorgung mechanisch und elektrisch mit dem Akkupack 100 verbindbar. In Fig. 1 ist die Handwerkzeugmaschine 300 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, welche mit einem Akkupack 100 betrieben werden. Die Handwerkzeugmaschine 300 weist einen Grundkörper 305, an welchem eine Werkzeugaufnahme 320 befestigt ist, sowie einen Handgriff 315 mit einer Schnittstelle 380 auf, an welchem eine korrespondierende Schnittstelle 180 eines erfindungsgemäßen Akkupacks 100, hier in verriegelter Stellung angeordnet ist. Der Akkupack 100 ist als Schiebeakkupack ausgebildet.

Beim Anbringen des Akkupacks 100 an der Handwerkzeugmaschine 300 werden an der Handwerkzeugmaschine 300 vorgesehene Aufnahmemittel, z. B. Führungsnuten und Führungsrippen mit korrespondierenden Führungselementen 110 des Akkupacks 100 in Eingriff gebracht, wobei der Akkupack 100 in einer Schieberichtung y entlang der Aufnahmemittel des Handgriffs 315 eingeführt wird, und wobei der Akkupack 100 entlang einer unteren, im Wesentlichen senkrecht zur Längsrichtung des Handgriffs 315 ausgerichteten Außenfläche 316 des Handgriffs 315 in die Akkupackaufnahme einer Handwerkzeugmaschine 300 geschoben wird. In der in der Figur 1 gezeigten Position ist der Akkupack 100 an dem Handgriff 315 der Handwerkzeugmaschine 300 befestigt und durch Verriegelungsmittel verriegelt. Die Verriegelungsmittel umfassen unter anderem ein Verriegelungselement und ein Betätigungselement 220. Durch Betätigung des Betätigungsmittels 220 kann der Akkupack 100 von dem Handgriff 315 der Handwerkzeugmaschine 300 gelöst werden.

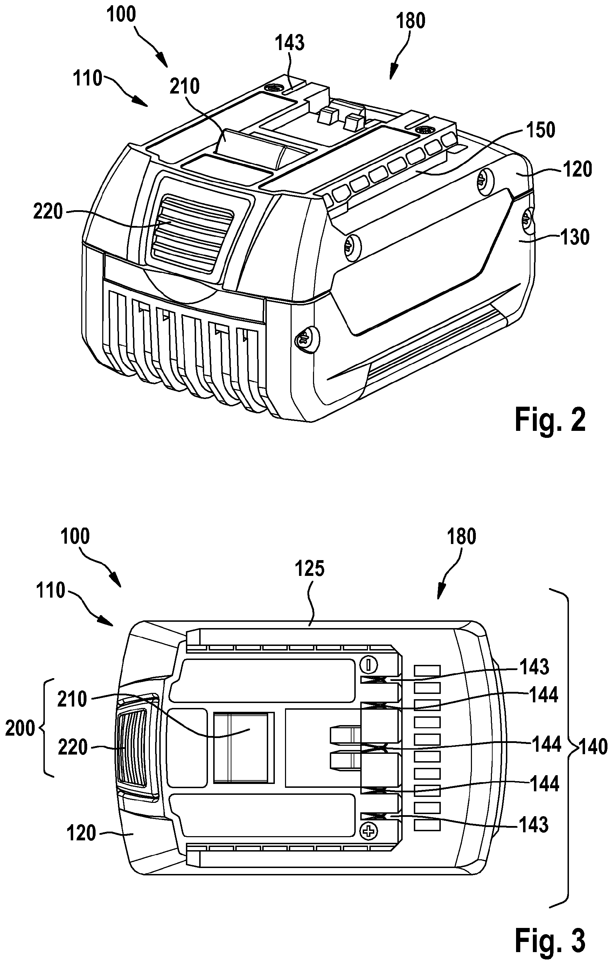

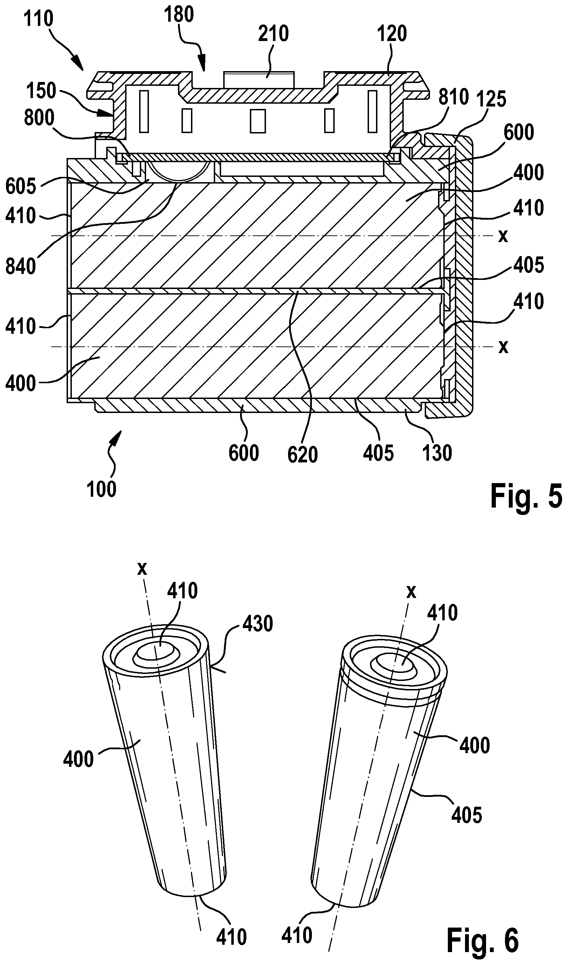

Die Figuren 2 bis 5 zeigen einen erfindungsgemäßen Akkupack 100 für eine Handwerkzeugmaschine 300. Dieser weist ein Gehäuse 110 aus einer ersten Gehäusekomponente 120 und einer zweiten Gehäusekomponente 130 auf, wobei das Gehäuse zwischen der ersten Gehäusekomponente 120 und der zweiten Gehäusekomponente 130 zumindest eine, vorzugsweise und hier dargestellt eine Mehrzahl parallel oder seriell verschaltete Akkuzellen 400 aufnimmt. Die Akkuzellen 400 werden bevorzugterweise entweder mittels eines Zellenhalters 600 oder mittels Papphülsen als Isolierummantelung 430 zur Isolation der Akkuzellen 400 untereinander zwischen den beiden Gehäusekomponenten 120, 130 positioniert. Der Akkupack 100 ist in der dargestellten Ausführungsvariante als Schiebeakkupack ausgebildet. Die Akkuzellen 400 werden bevorzugterweise mittels eines Zellenhalters 600 zur Isolation der Akkuzellen 400 untereinander in dem Akkupackgehäuse 110 positioniert und gehalten. Zusätzlich können die Akkuzellen 400 zur Isolation untereinander mit einer aus dem Stand der Technik an sich bekannten Isolierummantelung 430 versehen sein. Als Isolierummantelung 430 können Papphülsen oder Kunststoffhülsen, z.B. Schrumpfschläuche, vorgesehen sein. Die Isolierummantelung 430 ist unten im Zusammenhang mit Figur 6 weiter beschrieben.

Zum lösbaren Anbringen des Akkupacks 100 an einer Handwerkzeugmaschine 300 oder an einem Ladegerät weist der Akkupack 100 eine Schnittstelle 180 zur lösbaren mechanischen und elektrischen Verbindung mit einer korrespondierenden Schnittstelle 380 der Handwerkzeugmaschine 300 oder einer korrespondierende Schnittstelle des Ladegerätes auf. Beim Anbringen des Akkupacks 100 werden Aufnahmemittel 310, z. B. Führungsnuten und Führungsrippen, der Handwerkzeugmaschine 300 oder des Ladegerätes zur Aufnahme der korrespondierenden Führungselemente 110 des Akkupacks 100 mit diesen in Eingriff gebracht, wobei der Akkupack 100 in einer Kontaktierungsrichtung y entlang der Aufnahmemittel 310 eingeführt und die Schnittstelle 180 des Akkupacks 100 in die korrespondierende Schnittstelle 380 der Handwerkzeugmaschine 300 oder die korrespondierende Schnittstelle des Ladegerätes geschoben wird. Über die Schnittstellen 180, 380 kann der Akkupack 100 der Handwerkzeugmaschine 300 und/oder dem Ladegerät zugeordnet werden.

Zum Verriegeln des Akkupacks 100 am Handgriff 315 wird der Akkupack 100 in einer Schieberichtung y entlang des Handgriffs 315 geschoben, und zwar entlang einer unteren, im Wesentlichen senkrecht zur Längsrichtung des Handgriffs 315 ausgerichteten Außenfläche des Handgriffs 315. In der in der Figur 1 gezeigten Position ist der Akkupack 100 durch Verriegelungsmittel 200 am Handgriff 315 verriegelt. Die Verriegelungsmittel 200 umfassen unter anderem ein nur schematisch angedeutetes Verriegelungselement 210 und ein Betätigungselement 220. Durch Betätigung des Betätigungsmittels 220 kann der Akkupack 100 von dem Handgriff 315 der Handwerkzeugmaschine 300 gelöst werden. Nach Entriegelung des Akkupacks 100 kann dieser vom Handgriff 315 getrennt werden, und zwar durch ein Schieben des Akkupacks 100 entgegen der Schieberichtung y entlang einer unteren Fläche des Handgriffs 315. Beim Anbringen des Akkupacks 100 an einer Handwerkzeugmaschine 300 wird das Verriegelungselement 210 in Eingriff mit einer nicht näher gezeigten korrespondierenden Aufnahme im Handgriff 315 der Handwerkzeugmaschine 300 gebracht.

Wie in Figur 3 zu erkennen ist, umfasst die Schnittstelle 180 außerdem Kontaktelemente 140 zur elektrischen Kontaktierung des Akkupacks 100 mit der Handwerkzeugmaschine 300 oder dem Ladegerät. Die Kontaktelemente 143 sind als Spannungskontaktelemente ausgebildet und dienen als Lade- und/oder Entladekontaktelemente. Die Kontaktelemente 144 sind als Signalkontaktelemente ausgebildet und dienen der Signalübertragung vom Akkupack 100 zu der Handwerkzeugmaschine 300 oder dem Ladegerät und/oder von der Handwerkzeugmaschine 300 oder dem Ladegerät zum Akkupack 100.

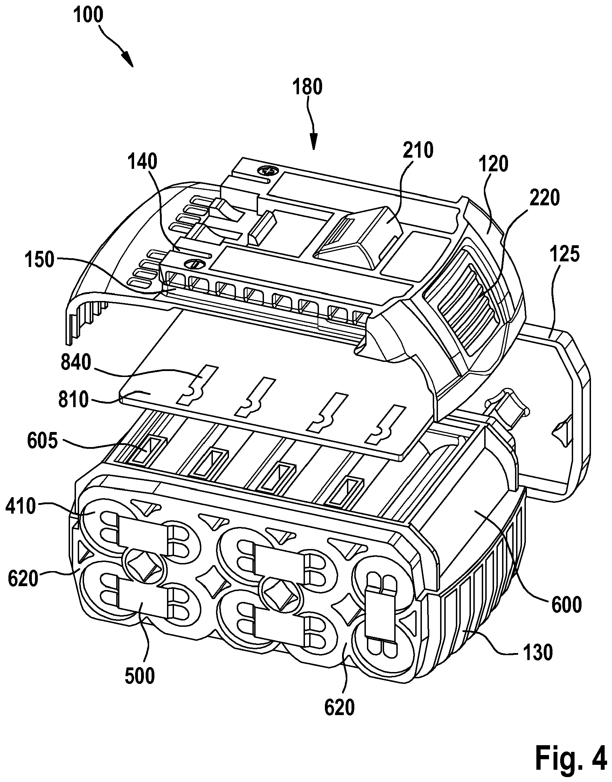

Figur 4 zeigt einen Akkupack 100 in der Explosionsdarstellung. Hier ist deutlich zu erkennen, dass das Akkupackgehäuse 110 einen Zellenhalter 600 mit einer Mehrzahl in einer Reihenschaltung verschalteter Akkuzellen 400 aufweist, wobei die zweite Gehäusekomponente 130 den Zellenhalter 600 unmittelbar ausbildet. Die Verbindung der Akkuzellen untereinander wird über Zellverbinder 500 realisiert. Ferner ist zu erkennen, dass die einzelnen Akkuzellen 400 zur mechanischen Fixierung in dem Zellenhalter 600 beabstandet voneinander aufgenommen sind. Der Zellenhalter 600 dient neben der Fixierung der Akkuzellen 400 in dem Akkupackgehäuse 120, 130 auch der Kühlung der Akkuzellen 400 und besteht aus einem wärmeleitfähigen Material, beispielsweise Aluminium oder einem Kunststoff. Des Weiteren weist der Zellenhalter 600 hülsenartige Isolierwandungen 620 auf, so dass die einzelnen Akkuzellen 400 separiert werden und eine elektrische Isolierung der einzelnen Akkuzellen 400 voneinander gewährleistet werden kann. Der Wärmeübergangswiderstand zwischen den benachbarten Akkuzellen 400 sowie zwischen den Akkuzellen 400 und dem Zellenhalter 600 ist dabei möglichst gering, so dass die von den Akkuzellen 400 erzeugte Verlustwärme gut nach außen abgeführt und eine Überhitzung des Akkupacks im Inneren verhindert werden kann. An der Oberfläche des Zellenhalters 600 ist innerhalb des Akkupackgehäuses 120, 130 eine Leiterplatine 810 einer Akkupackelektronik befestigt. Ferner umfasst die Akkupackelektronik die Kontaktelemente 140 zur Herstellung der elektrischen und mechanischen Verbindung zwischen dem Akkupack 100 und der Handwerkzeugmaschine 300 bzw. zwischen dem Akkupack 100 und dem Ladegerät. Die Verbindung zwischen der Akkupackelektronik und dem Zellenhalter 600 wird durch nicht näher dargestellte Befestigungselemente gewährleistet.

In der in Figur 4 dargestellten Ausführungsform weist das Akkupackgehäuse 110 ferner zwei Seitenkomponenten 125 auf, wobei in Figur 4 lediglich eine der beiden Seitenkomponenten 125 dargestellt ist. Die Seitenkomponenten 125 halten im zusammengebauten Zustand die erste Gehäusekomponente 120 und die zweite Gehäusekomponente 130 derart zusammen, dass ein Ablösen der ersten Gehäusekomponente 120 von der zweiten Gehäusekomponente 130, oder umgekehrt, verhindert wird. In der dargestellten Ausführungsform ist deutlich erkennbar, dass der Zellenhalter 600 bereichsweise eine Außenseite der zweiten Gehäusekomponente 130 bzw. des Akkupacks 100 ausbildet, wobei alternativ der Zellenhalter 600 auch bereichsweise eine Außenseite der ersten Gehäusekomponente 120 ausbilden kann.

In Figur 4 sind ferner Kontaktmittel 840 angedeutet, die an der Leiterplatte 810 angebracht sind. In der dargestellten Ausführungsform haben die Kontaktmittel 840 die Form von Kontaktfedern. In nicht dargestellter Weise sind die Kontaktmittel 840 mit weiteren an der Leiterplatte 810 angebrachten elektronischen Einheiten, beispielsweise einem nicht dargestellten Microcontroller verbunden, um auf diese Weise eine Überwachung und/oder Steuerung der Akkuzellen 400 zu ermöglichen, beispielsweise eine Einzelspannungsüberwachung der Akkuzellen 400. Die Leiterplatte 810 ist unter anderem in nicht weiter dargestellter Weise elektrisch mit den Kontaktelementen 140 verbunden.

In der dargestellten Ausführungsform weist der Zellenhalter 600 mit den Kontaktmitteln 840 korrespondierende Aussparungen 605 auf, durch welche hindurch die Kontaktmittel 840 die Akkuzellen 400 kontaktieren.

Die Kontaktierung einer Akkuzelle 400 durch ein Kontaktmittel 840 ist in Figur 5 dargestellt, die eine Seitenansicht des erfindungsgemäßen Akkupacks 100 zeigt. Es ist zu erkennen, dass die in Figur 5 oben, das heißt näher an der Leiterplatte 810 liegende Akkuzelle 400 durch eine Wandung des Zellenhalters 600 mechanisch und elektrisch von der Leiterplatte 810 isoliert ist und das Kontaktmittel 840 die Akkuzelle 400 durch die Ausnehmung 605 hindurch kontaktiert. In der dargestellten Ausführungsform weist die Akkuzelle 400 zumindest im Bereich der Kontaktierung durch das Kontaktmittel 840 keine Isolierummantelung 430 auf. Die Qualität des elektrischen Kontaktes kann in einer bevorzugten Ausführungsform dadurch erhöht werden, dass die Mantelfläche 405 der Akkuzelle 400 zur Reduzierung eines Übergangwiderstandes zwischen dem Kontaktmittel 840 und der Akkuzelle 400 mit einer leitfähigen und passivierenden Paste versehen ist.

Des weiteren kann Figur 5 entnommen werden, dass sich die Mantelflächen 405 zweier im Zellenhalter 600 nebeneinander angeordneter Akkuzellen 400 nicht berühren, sondern durch die hülsenartigen Isolierwandungen 620 mechanisch und elektrisch voneinander getrennt sind.

Die Figur 6 zeigt auf der linken Seite eine zylindrische Akkuzelle 400 mit einer an sich aus dem Stand der Technik bekannten Isolierummantelung 430 und auf der rechten Seite eine zylindrische Akkuzelle 400 ohne eine Isolierummantelung 430, wobei die Akkuzellen 400 jeweils eine zu einer Längsachse x parallel verlaufende Mantelfläche 405 aufweisen, welche von zwei senkrecht zu der Längsachse x stehenden Stirnflächen 410 begrenzt sind. Die Mantelfläche 405 und die Stirnflächen 410 bilden eine Außenhülle der Akkuzelle 400. An den Stirnflächen 410 befinden sich die elektrischen Pole der Akkuzellen 400 zur elektrischen Kontaktierung. Die Außenhülle der Akkuzellen 400 ist aus einem elektrisch leitfähigen Material, insbesondere einem Metall, vorzugsweise Aluminium. Die Isolierummantelung 430 umgibt zumindest die Mantelfläche 405 im Wesentlichen vollständig. Die Stirnflächen 410, insbesondere die Pole an den Stirnflächen 410, liegen frei, um die elektrische Kontaktierung zu ermöglichen. Die Stirnflächen 410, insbesondere die Pole an den Stirnflächen 410 sind frei von der Isolierummantelung 430. Als Isolierummantelung 430 eignen sich elektrisch nicht leitfähige Materialien, z.B. Papier, Pappe, Kunststoff. Die Isolierummantelung 430 bildet insbesondere eine dünne, eng an die Mantelfläche 405 anliegende Hülse.

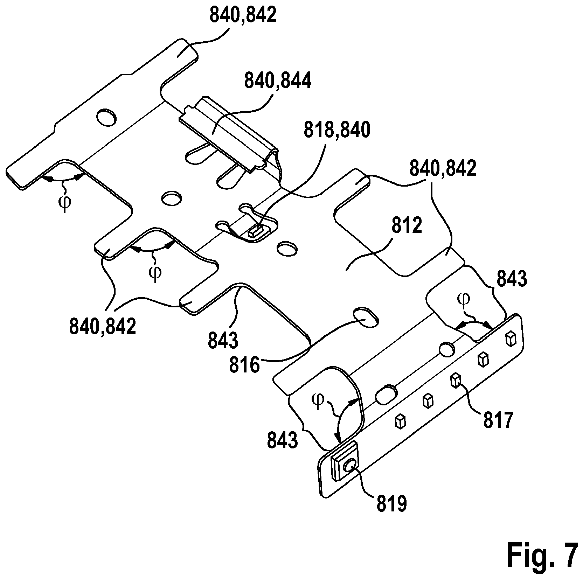

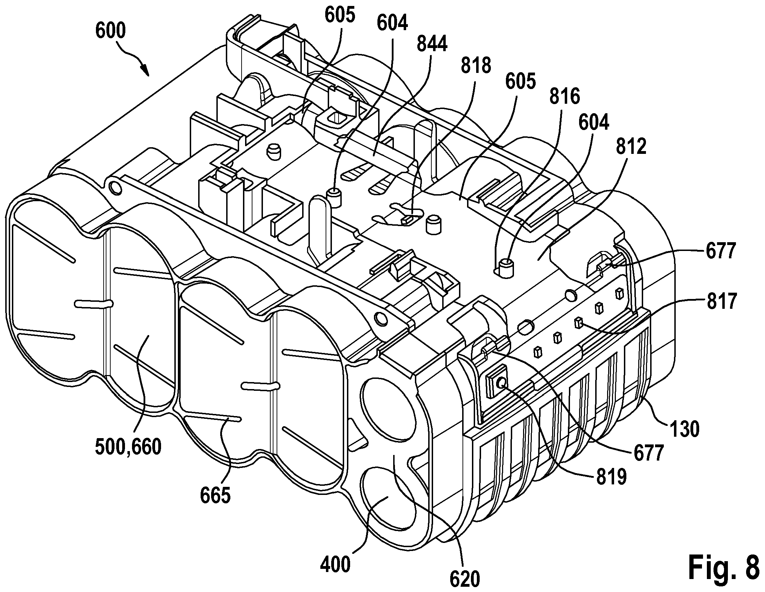

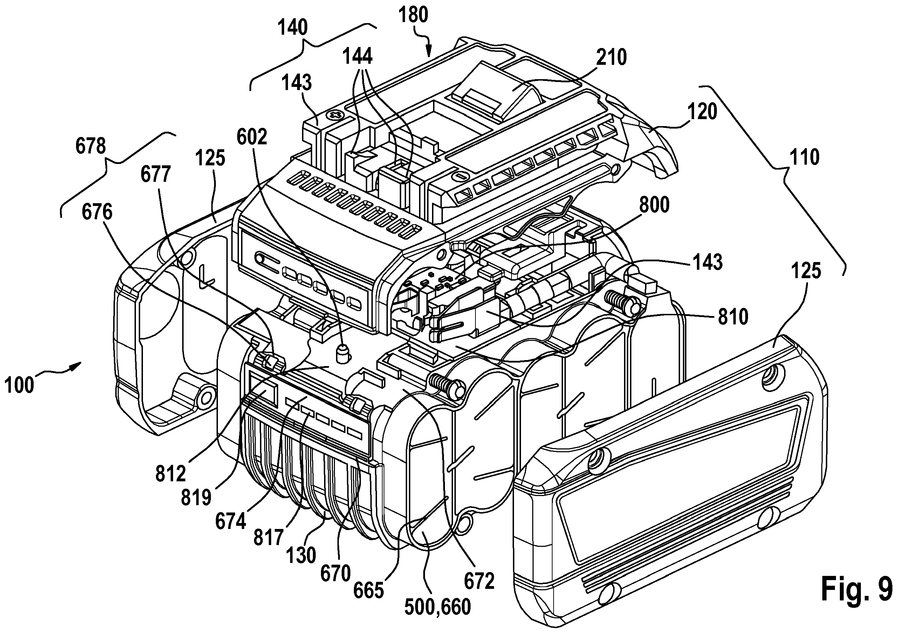

Die Akkupackelektronik 800 weist ferner eine insbesondere in der Figur 7 dargestellte flexible Leiterplatte 812 mit mehreren Kontaktmitteln 840 auf, die vorteilhafterweise, wie in den Figuren 8 und 9 dargestellt, am Zellenhalter 600 befestigt wird. Die flexible Leiterplatte 812 ist entweder direkt mit dem nicht dargestellten Mikrocontroller und/oder über eine Kontaktlasche 844 mit der Leiterplatte 810 verbunden.

Die flexible Leiterplatte 812 weist eine Biegesteifigkeit auf, die zumindest bereichsweise derart ausgestaltet ist, dass eine Biegeverformung der flexiblen Leiterplatte 812 im montierten Zustand zumindest bereichsweise möglich ist. Die Biegeverformung der flexiblen Leiterplatte 812 kann derart stattfinden, dass eine Mittelebene der Leiterplatte 812 jeweils in einem Bereich der Biegeumformung 843 um einen Winkel ϕ gegenüber einer ursprünglichen Lage verformt wird. Auf diese Weise kann die flexible Leiterplatte 812, wie in den Figuren 8 und 9 zu erkennen ist, an die geometrische Form des Akkupackgehäuses 110 bzw. des Zellenhalters 600 variabel angepasst werden. Um eine Lagesicherung der flexiblen Leiterplatte 812 auf dem Zellenhalter 600 zu gewährleisten, weist der Zellenhalter 600 mehrere Positionierungselemente 604 auf. Die Positionierungselemente 604 greifen im montierten Zustand in korrespondierende Ausnehmungen 816 der flexiblen Leiterplatte 812 ein.

Wie insbesondere in der Figur 7 dargestellt, weist die flexible Leiterplatte 812 mehrere mit Akkuzellen 400 korrespondierende Kontaktmittel 840 auf, wobei die Kontaktmittel 840 vorteilhafterweise in Form einer biegbaren Kontaktzunge 842, vorzugsweise in Form von zwei gegenüberliegend angeordneten, biegbaren Kontaktzungen 842 ausgebildet sind, die wie in Figur 8 dargestellt in korrespondierende Aussparungen 605 im Zellenhalter 600 eingefügt werden und dazu ausgebildet sind, eine korrespondierende Akkuzelle 400 elektrisch zu kontaktieren.

Ferner können mehrere verschiedene elektrische Bauteile auf der flexiblen Leiterplatte 812 bzw. an den Kontaktmitteln 840 positioniert werden, die örtlich voneinander getrennt angeordnet sind, wie beispielsweise verschiedene Betätigungselemente 819, Leuchtanzeigen 817, Spannungsabgriffe, Temperatursensoren 818, diverse Funktionsgruppen der Akkupackelektronik 800, Antennen für ein Funkmodul, Anschlüsse für ein Wireless-Lademodul, und/oder andere oberflächenmontierten Bauelemente. Oberflächenmontierte Bauelemente (Surface Mounted Devices, kurz SMD) ermöglichen es, die Bestückungsdichte auf einer Leiterplatten 810, 812 zu erhöhen und diese quasi beliebig, z.B. mit einer Anbindung eines Induktivlademoduls mit zusätzlichen Strom- und Signalleitungen, zu erweitern. Somit kann durch die vorliegende Erfindung die Komplexität der Verkabelung und/oder die Anzahl von Lötverbindungen innerhalb des Akkupackgehäuses 110 reduziert werden, wodurch der Montageaufwand und damit die Kosten verringert werden und das Akkupack 100 robuster und langlebiger wird.

Figur 9 zeigt eine zweite Ausführungsform eines erfindungsgemäßen Akkupacks 100 in einer Explosionsdarstellung. In der dargestellten Ausführungsform ist zu erkennen, dass innerhalb des Akkupackgehäuses 110 an der Oberfläche des Zellenhalters 600 die Leiterplatte 810 mit der Akkupackelektronik 800 befestigt ist. Auf der Leiterplatte 810 sind die Kontaktelemente 140 zur Herstellung der elektrischen und mechanischen Verbindung zwischen dem Akkupack 100 und der Handwerkzeugmaschine 300 bzw. zwischen dem Akkupack 100 und dem Ladegerät angeordnet. Dabei sind die Kontaktelemente 143 als Spannungskontaktelemente und die Kontaktelemente 144 als Signalkontaktelemente ausgebildet. Ferner ist zu erkennen, dass der Akkupack 100 die insbesondere in der Figur 7 dargestellte flexible Leiterplatte 812 mit mehreren Kontaktmitteln 840, welche korrespondierende Akkuzelle 400 im Zellenhalter 600 elektrisch kontaktieren, aufweist. Auf diese Weise kann auf die Kontaktierung der einzelnen Akkuzellen 400 mit der Akkupackelektronik 800 über zusätzliche Stromleiter verzichtet werden.

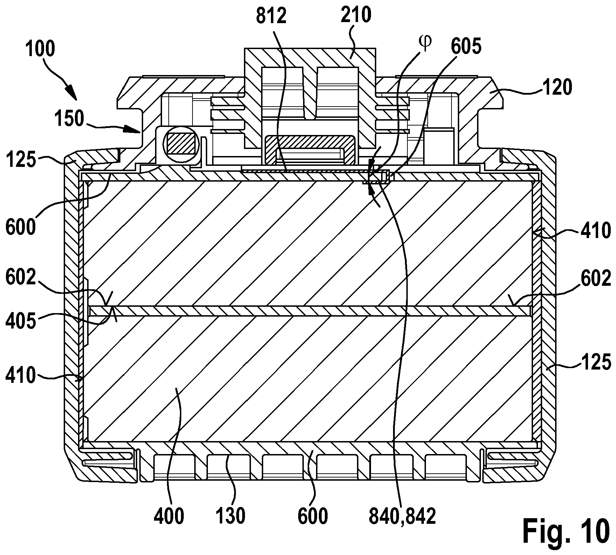

Wie in Figur 10 im Detail dargestellt, weist der Zellenhalter 600 im Bereich des Zellkanals 402 für jede Akkuzelle 400 eine mit den Kontaktmitteln 840 korrespondierende Aussparung 605 auf, durch die das jeweilige Kontaktmittel 840 in den Zellkanal 402 zur Kontaktierung der Akkuzelle 400 eingeführt werden kann. Die Kontaktzungen 842 werden mit Hilfe eines Werkzeuges in die Aussparungen 605 des Zellenhalters 600 in einen Zellkanal 402 eingeführt. Die Kontaktzungen 842 werden ferner beim Einführen der Akkuzellen 400 um den Winkel ϕ gegenüber einer ursprünglichen Lage verformt. Nach der Einführung der Akkuzellen 400 in den Zellkanal wird das Kontaktmittel 840 zwischen der Isolierwandung 620 des Zellkanals 602 und der Akkuzelle 400 eingeklemmt, wobei alternativ die Kontaktmittel 840 bzw. die Kontaktzungen 842 zur elektrischen Kontaktierung an die Akkuzellen 400 geschweißt oder gelötet werden können. Nach erfolgter Einführung der Akkuzellen 400 hat der Winkel ϕ einen Wert von circa 180°, wobei auch ein Wert zwischen 10° und 200°, bevorzugterweise einen Wert zwischen 30° und 190° möglich ist. Auf diese Weise kontaktieren die Kontaktmittel 840 die Akkuzellen 400, so dass die einzelnen Akkuzellen 400 über die Kontaktmittel 840 bzw. die Kontaktzungen 842 direkt mit der flexiblen Leiterplatte 812 elektrisch verbunden sind. Bei der in den Figuren 8 und 9 dargestellten Ausführungsform entsteht durch die zwei gegenüberliegend angeordneten Kontaktmitteln 840 der flexiblen Leiterplatte 812 bei der Einführung der Akkuzellen 400 in den Zellkanal 402 ein gleichmäßiger Zug in beide Richtungen auf die flexible Leiterplatte 600.

Die Qualität des elektrischen Kontaktes kann in einer bevorzugten Ausführungsform dadurch erhöht werden, dass die Akkuzellen 400 im Wesentlichen keine Isolierummantelung bzw. nur bereichsweise eine Isolierummantelung aufweisen, wobei die Isolierummantelung zumindest in dem Bereich, in dem die Kontaktmittel 840 die Akkuzellen 400 kontaktieren, wenigstens eine Aussparung aufweist, wobei zur Reduzierung eines Übergangwiderstandes zwischen dem Kontaktmittel 840 und der Akkuzelle 400 die Akkuzelle 400 mit einer leitfähigen und passivierenden Paste versehen sein kann.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Akkupack (100) für eine Handwerkzeugmaschine (300), aufweisend
einen Zellenhalter (600), der mindestens eine Akkuzelle (400) aufnimmt, wobei die Akkuzelle (400) eine zu einer Längsachse (x) parallel verlaufende Mantelfläche (405) aufweist, wobei die Mantelfläche (405) von zwei im Wesentlichen senkrecht zu der Längsachse (x) stehenden Stirnflächen (410) begrenzt wird, und wobei die Mantelfläche (405) und die Stirnflächen (410) eine Außenhülle der Akkuzelle (400) bilden; und
eine Akkupackelektronik (800), wobei die Akkupackelektronik (800) zumindest eine Leiterplatte (810) mit Kontaktelementen (140) zur Herstellung einer elektrischen Verbindung zwischen dem Akkupack (100) und der Handwerkzeugmaschine (300) umfasst;
**dadurch gekennzeichnet, dass**
des Weiteren wenigstens ein mit der Akkuzelle (400) korrespondierendes Kontaktmittel (840) vorgesehen ist, das die Akkuzelle (400) an der Mantelfläche (405) elektrisch kontaktiert, und dass die Akkupackelektronik (800) einen Microcontroller umfasst, wobei der Mikrocontroller elektrisch mit dem Kontaktmittel (840) verbunden ist und dazu konfiguriert ist wenigstens einen Betriebsparameter der einzelnen Akkuzelle (400) über das wenigstens eine Kontaktmittel (840) zu erfassen.

2. Akkupack (100) nach Anspruch 1, **dadurch gekennzeichnet, dass** die Akkupackelektronik (800) des Weiteren zumindest eine zweite, insbesondere flexible Leiterplatte (812) umfasst.

3. Akkupack (100) nach Anspruch 1 oder 2, **dadurch gekennzeichnet, dass** das wenigstens eine mit der Akkuzelle (400) korrespondierende Kontaktmittel (840) auf der Leiterplatte (810) angeordnet ist.

4. Akkupack (100) nach Anspruch 1 oder 2, **dadurch gekennzeichnet, dass** das wenigstens eine mit der Akkuzelle (400) korrespondierende Kontaktmittel (840) auf der zweiten flexiblen Leiterplatte (812) angeordnet ist.

5. Akkupack (100) nach einem der vorhergehenden Ansprüche, **dadurch gekennzeichnet, dass** die wenigstens eine Akkuzelle (400) im Wesentlichen keine Isolierummantelung (430) aufweist.

6. Akkupack (100) nach einem der vorhergehenden Ansprüche 1 bis 4, **dadurch gekennzeichnet, dass** die wenigstens eine Akkuzelle (400) bereichsweise eine Isolierummantelung (430) aufweist, wobei die Isolierungsummantelung (430) vorzugsweise an den Stirnflächen (410) und/oder den Bereichen der Mantelflächen (405), die an die Stirnflächen (410) angrenzt.

7. Akkupack (100) nach Anspruch 6, **dadurch gekennzeichnet, dass** die Akkuzelle (400) eine Isolierummantelung (430) aufweist, wobei die Isolierummantelung (430) zumindest in dem Bereich, in dem das Kontaktmittel (840) die Akkuzelle (400) kontaktiert, wenigstens eine Aussparung aufweist.

8. Akkupack (100) nach einem der vorhergehenden Ansprüche, **dadurch gekennzeichnet, dass** das Kontaktmittel (840) in Form einer Kontaktfeder und/oder einer Kontaktklinge, insbesondere als Schneidklemmkontakt ausgebildet ist.

9. Akkupack (100) nach einem der vorhergehenden Ansprüche, **dadurch gekennzeichnet, dass** der Zellenhalter (600) mit der Akkuzelle (400) korrespondierende hülsenartige Isolierwandungen (620) aufweist, wobei die Isolierwandungen (620) zumindest in den Bereichen, in dem die Kontaktmittel (840) die Akkuzelle (400) kontaktieren, wenigstens eine Aussparung (605) aufweist.

10. Akkupack (100) nach Anspruch 9, **dadurch gekennzeichnet, dass** die Isolierwandungen (620) derart ausgehführt sind, dass eine elektrische Kontaktierung zwischen mehreren Akkuzellen (400) verhindert wird.

11. Akkupack (100) nach vorhergehenden Ansprüche 9 oder 10, **dadurch gekennzeichnet, dass** die Isolierwandungen (620) die jeweilige Akkuzelle (400) im Wesentlichen vollständig umgeben, wobei sich die Isolierwandungen (620) insbesondere in den Bereichen zwischen den Mantelflächen (405) erstrecken.

12. Akkupack (100) nach einem der vorhergehenden Ansprüche, **dadurch gekennzeichnet, dass** die Akkuzelle (400) in dem Bereich, in dem das Kontaktmittel (840) die Akkuzelle (400) kontaktiert, zur Reduzierung eines Übergangwiderstandes zwischen dem Kontaktmittel (840) und der Akkuzelle (400) mit einer leitfähigen und passivierenden Paste versehen ist.

13. Akkupack (100) nach einem der vorhergehenden Ansprüche 9 bis 12,
**dadurch gekennzeichnet, dass** die Akkuzelle (400) in dem Bereich der Aussparung (605) des Zellenhalters (600) eine Isolierummantelung (430) aufweist, wobei das Kontaktmittel (840) in Form einer Kontaktklinge ausgebildet ist, wobei die Kontaktierung der Akkuzelle (400) durch das Kontaktmittel (840) durch Einschieben der Akkuzelle (400) in den Zellenhalter (600) erfolgt, wobei das Kontaktmittel (840) die Akkuzelle (400) während des Einschiebens zur Herstellung eines elektrischen Kontaktes anritzt.

14. Akkupack (100) nach einem der vorhergehenden Ansprüche 4 bis 13,
**dadurch gekennzeichnet, dass** der Mikrocontroller dazu konfiguriert ist, eine Einzelspannungsüberwachung der einzelnen Akkuzellen (400) über die Kontaktmittel (840) durchzuführen.

15. Handwerkzeugmaschine (300) mit einem Elektromotor sowie einem lösbar mit der Handwerkzeugmaschine (300) verbindbaren Akkupack (100) nach einem der vorhergehenden Ansprüche, wobei der Akkupack (100) im eingebauten Zustand elektrisch mit der Handwerkzeugmaschine (300) verbunden ist.

## Claims

1. Rechargeable battery pack (100) for a handheld power tool (300), having
a cell holder (600) which accommodates at least one rechargeable battery cell (400), wherein the rechargeable battery cell (400) has a lateral surface (405) which runs parallel to a longitudinal axis (x), wherein the lateral surface (405) is delimited by two end faces (410) which are substantially perpendicular to the longitudinal axis (x), and wherein the lateral surface (405) and the end faces (410) form an outer casing of the rechargeable battery cell (400); and
a rechargeable battery pack electronics system (800), wherein the rechargeable battery pack electronics system (800) comprises at least one printed circuit board (810) with contact elements (140) for establishing an electrical connection between the rechargeable battery pack (100) and the handheld power tool (300);
**characterized in that**
at least one contact means (840) which corresponds to the rechargeable battery cell (400) and electrically contact-connects the rechargeable battery cell (400) to the lateral surface (405) is further provided, and **in that** the rechargeable battery pack electronics system (800) comprises a microcontroller, wherein the microcontroller is electrically connected to the contact means (840) and is designed to detect at least one operating parameter of the individual rechargeable battery cell (400) by means of the at least one contact means (840).

2. Rechargeable battery pack (100) according to Claim 1, **characterized in that** the rechargeable battery pack electronics system (800) further comprises at least one second, in particular flexible, printed circuit board (812).

3. Rechargeable battery pack (100) according to Claim 1 or 2, **characterized in that** the at least one contact means (840) which corresponds to the rechargeable battery cell (400) is arranged on the printed circuit board (810).

4. Rechargeable battery pack (100) according to Claim 1 or 2, **characterized in that** the at least one contact means (840) which corresponds to the rechargeable battery cell (400) is arranged on the second flexible printed circuit board (812).

5. Rechargeable battery pack (100) according to one of the preceding claims, **characterized in that** the at least one rechargeable battery cell (400) has substantially no insulating sheathing (430).

6. Rechargeable battery pack (100) according to one of the preceding Claims 1 to 4, **characterized in that** the at least one rechargeable battery cell (400) has an insulating sheathing (430) in regions, wherein the insulation sheathing (430) preferably adjoins the end faces (410) and/or the regions of the lateral surfaces (405) which on the end faces (410).

7. Rechargeable battery pack (100) according to Claim 6, **characterized in that** the rechargeable battery cell (400) has an insulating sheathing (430), wherein the insulating sheathing (430) has at least one cutout at least in the region in which the contact means (840) makes contact with the rechargeable battery cell (400).

8. Rechargeable battery pack (100) according to one of the preceding claims, **characterized in that** the contact means (840) is designed in the form of a contact spring and/or a contact blade, in particular as an insulation-displacement terminal contact.

9. Rechargeable battery pack (100) according to one of the preceding claims, **characterized in that** the cell holder (600) has sleeve-like insulating walls (620) which correspond to the rechargeable battery cell (400), wherein the insulating walls (620) have at least one cutout (605), at least in the regions in which the contact means (840) make contact with the rechargeable battery cell (400).

10. Rechargeable battery pack (100) according to Claim 9, **characterized in that** the insulating walls (620) are designed in such a way that electrical contact-connection between a plurality of rechargeable battery cells (400) is prevented.

11. Rechargeable battery pack (100) according to preceding Claim 9 or 10, **characterized in that** the insulating walls (620) substantially completely surround the respective rechargeable battery cell (400), wherein the insulating walls (620) extend, in particular, in the regions between the lateral surfaces (405).

12. Rechargeable battery pack (100) according to one of the preceding claims, **characterized in that** the rechargeable battery cell (400) is provided with a conductive and passivating paste in the region in which the contact means (840) makes contact with the rechargeable battery cell (400), for the purpose of reducing a contact resistance between the contact means (840) and the rechargeable battery cell (400).

13. Rechargeable battery pack (100) according to one of the preceding Claims 9 to 12, **characterized in that** the rechargeable battery cell (400) has an insulating sheathing (430) in the region of the cutout (605) of the cell holder (600), wherein the contact means (840) is designed in the form of a contact blade, wherein contact is made with the rechargeable battery cell (400) by the contact means (840) by inserting the rechargeable battery cell (400) into the cell holder (600), wherein the contact means (840) scratches the rechargeable battery cell (400) during the insertion process for the purpose of establishing electrical contact.

14. Rechargeable battery pack (100) according to one of the preceding Claims 4 to 13, **characterized in that** the microcontroller is configured to carry out individual voltage monitoring of the individual rechargeable battery cells (400) by means of the contact means (840).

15. Handheld power tool (300) comprising an electric motor and also a rechargeable battery pack (100) according to one of the preceding claims which can be releasably connected to the handheld power tool (300), wherein the rechargeable battery pack (100), in the installed state, is electrically connected to the handheld power tool (300).

## Revendications

1. Bloc de batteries (100) destiné à une machine-outil manuelle (300), comportant
un support de batterie (600), qui réceptionne au moins une batterie (400), la batterie (400) comportant une surface d'enveloppe (405) s'écoulant à la parallèle d'un axe longitudinal (x), la surface d'enveloppe (405) étant délimitée par deux faces frontales (410) debout sensiblement à la perpendiculaire de l'axe longitudinal (x) et la surface d'enveloppe (405) et les faces frontales (410) formant une gaine extérieure de la batterie (400) ; et
une électronique de bloc de batterie (800), l'électronique de bloc de batterie (800) comprenant au moins une carte de circuit imprimé (810) pourvue d'éléments de contact (140), destinée à établir une connexion électrique entre le bloc de batteries (100) et la machine-outil manuelle (300) ; **caractérisé en ce**
**qu'**il est prévu par ailleurs au moins un moyen de contact (840) correspondant avec la batterie (400), qui contacte électriquement la batterie (400) sur la surface d'enveloppe (405) et **en ce que** l'électronique de bloc de batterie (800) comprend un microcontrôleur, le microcontrôleur étant contacté électriquement avec le moyen de contact (840) et configuré pour détecter au moins un paramètre de service de la batterie (400) individuelle par l'intermédiaire de l'au moins un un moyen de contact (840).

2. Bloc de batteries (100) selon la revendication 1, **caractérisé en ce que** l'électronique de bloc de batterie (800) comporte par ailleurs une deuxième carte de circuit imprimé (812), notamment souple.

3. Bloc de batteries (100) selon la revendication 1 ou 2, **caractérisé en ce qu'**au moins un moyen de contact (840) correspondant avec la batterie (400) est placé sur la carte de circuit imprimé (810).

4. Bloc de batteries (100) selon la revendication 1 ou 2, **caractérisé en ce que** l'au moins un moyen de contact (840) correspondant avec la batterie (400) est placé sur la deuxième carte de circuit imprimé (812) souple.

5. Bloc de batteries (100) selon l'une quelconque des revendications précédentes, **caractérisé en ce que** l'au moins une batterie (400) ne comporte sensiblement aucune gaine isolante (430).

6. Bloc de batteries (100) selon l'une quelconque des revendications précédentes 1 à 4, **caractérisé en ce que** l'au moins une batterie (400) comporte par endroits une gaine isolante (430), la gaine isolante (430) jouxtant de préférence les faces frontales (410) et/ou les régions des surfaces d'enveloppe (405), qui sur les faces frontales (410).

7. Bloc de batteries (100) selon la revendication 6, **caractérisé en ce que** la batterie (400) comporte une gaine isolante (430), au moins dans la région dans laquelle le moyen de contact (840) contacte la batterie (400), la gaine isolante (430) comportant au moins un évidement.

8. Bloc de batteries (100) selon l'une quelconque des revendications précédentes, **caractérisé en ce que** le moyen de contact (840) est conçu sous la forme d'un ressort de contact et/ou d'une lame de contact, notamment d'un contact autodénudant.

9. Bloc de batteries (100) selon l'une quelconque des revendications précédentes, **caractérisé en ce que** le support de batterie (600) comporte des parois isolantes (620) en forme de douilles, correspondant avec la batterie (400), au moins dans les régions dans lesquelles le moyen de contact (840) contacte la batterie (400), les parois isolantes (620) comportant au moins un évidement (605).

10. Bloc de batteries (100) selon la revendication 9, **caractérisé en ce que** les parois isolantes (620) sont réalisées de telle sorte qu'une mise en contact entre plusieurs batteries (400) soit empêchée.

11. Bloc de batteries (100) selon les revendications précédentes 9 ou 10, **caractérisé en ce que** les parois isolantes (620) entourent sensiblement de manière complète la batterie (400) concernée, les parois isolantes (620) s'étendant notamment dans les régions entre les surfaces d'enveloppe (405).

12. Bloc de batteries (100) selon l'une quelconque des revendications précédentes, **caractérisé en ce que** dans la région dans laquelle le moyen de contact (840) contacte la batterie (400), pour réduire une résistance de contact entre le moyen de contact (840) et la batterie (400), la batterie (400) est munie d'une pâte conductrice et passivante.

13. Bloc de batteries (100) selon l'une quelconque des revendications précédentes 9 à 12, **caractérisé en ce que** dans la région de l'évidement (605) du support de batterie (600), la batterie (400) comporte une gaine isolante (430), le moyen de contact (840) étant conçu sous la forme d'une lame de contact, la mise en contact de la batterie (400) par le moyen de contact (840) s'effectuant par insertion de la batterie (400) dans le support de batterie (600), pour la création d'un contact électrique, le moyen de contact (840) scarifiant la batterie (400) pendant l'insertion.

14. Bloc de batteries (100) selon l'une quelconque des revendications précédentes 4 à 13, **caractérisé en ce que** le microcontrôleur est configuré pour procéder à une supervision de la tension individuelle des batteries (400) individuelles par l'intermédiaire du moyen de contact (840).

15. Machine-outil manuelle (300) pourvue d'un moteur électrique, ainsi que d'un bloc de batteries (100) selon l'une quelconque des revendications précédentes, susceptible d'être assemblé de manière amovible avec la machine-outil manuelle (300), en position montée, le bloc de batteries (100) étant électriquement connecté avec la machine-outil manuelle (300).
